(19) Europäisches Patentamt
European Patent Office
Office européen des brevets

(11) EP 3 690 789 A1

(12) EUROPEAN PATENT APPLICATION

(43) Date of publication:
05.08.2020 Bulletin 2020/32

(51) Int Cl.:
G06Q 40/04 (2012.01)

(21) Application number: 20150474.3

(22) Date of filing: 07.01.2020

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 31.01.2019 JP 2019016157

(71) Applicant: FUJITSU LIMITED
Kanagawa 211-8588 (JP)

(72) Inventors:
• Takeuchi, Takuma
Kanagawa, 211-8588 (JP)
• Fujimoto, Shingo
Kanagawa, 211-8588 (JP)
• Kamakura, Ken
Kanagawa, 211-8588 (JP)

(74) Representative: Hoffmann Eitle
Patent- und Rechtsanwälte PartmbB
Arabellastraße 30
81925 München (DE)

(54) INFORMATION PROCESSING APPARATUS, INFORMATION PROCESSING METHOD, AND PROGRAM

(57) An information processing apparatus includes: an acquisition unit that acquires a price of a first transaction target in a history of transactions using a first virtual currency and a price of a second transaction target in a history of transactions using a second virtual currency; and a calculation unit that calculates an exchange ratio between the first virtual currency and the second virtual currency based on the price of the first transaction target and the price of the second transaction target.

FIG. 1

## Description

FIELD

The embodiment discussed herein is related to an information processing apparatus, an information processing method, and a computer-readable recording medium.

BACKGROUND

The use of a virtual currency on a blockchain is expected as a payment method replacing cash. When there are a plurality of types of virtual currency and a certain virtual currency is exchanged for a different virtual currency, exchange is performed based on the exchange ratio (exchange rate) between the two types of virtual currency. If the exchange ratio is an exchange ratio (exchange rate) between major virtual currencies, the exchange rate is given from time to time by, for example, a well-known exchange.

Examples of the related art include Eyal Hertzog, Guy Benartzi & Galia Benartzi: "Bancor Protocol - Continuous Liquidity and Asynchronous Price Discovery for Tokens through their Smart Contracts; aka "Smart Tokens"", Draft Version 0.99, May 30, 2017, https://bravenewcoin.com/assets/Whitepapers/Bancor-Protocol-Whitepaper-en.pdf.

However, for example, when there is no past record of exchange between a certain virtual currency such as a new virtual currency and another virtual currency or when a small amount of virtual currency is exchanged for another virtual currency, there is a possibility that a relevant exchange ratio is not set on the exchange.

Therefore, in an aspect, an object is to enable an objective value to be given to a virtual currency.

SUMMARY

According to an aspect of the embodiments, an information processing apparatus includes: an acquisition unit that acquires a price of a first transaction target in a history of transactions using a first virtual currency and a price of a second transaction target in a history of transactions using a second virtual currency; and a calculation unit that calculates an exchange ratio between the first virtual currency and the second virtual currency based on the price of the first transaction target and the price of the second transaction target.

BRIEF DESCRIPTION OF DRAWINGS

FIG. 1 is a diagram illustrating an example of a configuration of a communication system according to an embodiment;
FIG. 2 is a diagram illustrating an example of a hardware configuration of a server according to the embodiment;
FIG. 3 is a diagram illustrating an example of a functional configuration of the server according to the embodiment;
FIG. 4 is a sequence diagram illustrating an example of processing executed in a communication system according to the embodiment;
FIG. 5A is a diagram illustrating a first example of a history of transactions of commodities using a virtual currency according to the embodiment;
FIG. 5B is a diagram illustrating a second example of a history of transactions of commodities using the virtual currency according to the embodiment;
FIG. 6 is a flowchart describing an example of processing for calculating an exchange ratio between a virtual currency A and a virtual currency B according to the embodiment;
FIG. 7 is a flowchart describing an example of processing for calculating the exchange ratio based on histories of transactions of the same commodity according to the embodiment;
FIG. 8A is a diagram illustrating an example of a history of transactions of commodities using the virtual currency A according to the embodiment;
FIG. 8B is a diagram illustrating an example of a history of transactions of commodities using the virtual currency B according to the embodiment;
FIG. 9 is a flowchart describing an example of processing for calculating the exchange ratio based on histories of transactions of commodities of the same item according to the embodiment;
FIG. 10A is a diagram illustrating an example of a history of transactions of commodities using the virtual currency A according to the embodiment;
FIG. 10B is a diagram illustrating an example of a history of transactions of commodities using the virtual currency B according to the embodiment;
FIG. 11 is a flowchart describing an example of processing for calculating the exchange ratio based on histories of transactions of commodities that may be compared in value according to the embodiment;
FIG. 12A is a diagram illustrating an example of a history of transactions of commodities using the virtual currency A according to the embodiment;
FIG. 12B is a diagram illustrating an example of a history of transactions of commodities using the virtual currency B according to the embodiment;
FIG. 13 is a diagram illustrating an example of setting information of a ratio between values of commodities according to the embodiment;
FIG. 14 is a diagram illustrating an example of a history of transactions of commodities using a virtual currency C according to the embodiment;
FIG. 15 is a flowchart describing an example of processing for calculating the exchange ratio based on histories of transactions of items that may be compared in value according to the embodiment; and

FIG. 16 is a diagram illustrating an example of setting information of a ratio between values of items according to the embodiment.

## DESCRIPTION OF EMBODIMENTS

Hereinafter, an embodiment of the present disclosure will be described with reference to drawings.

### <System Configuration>

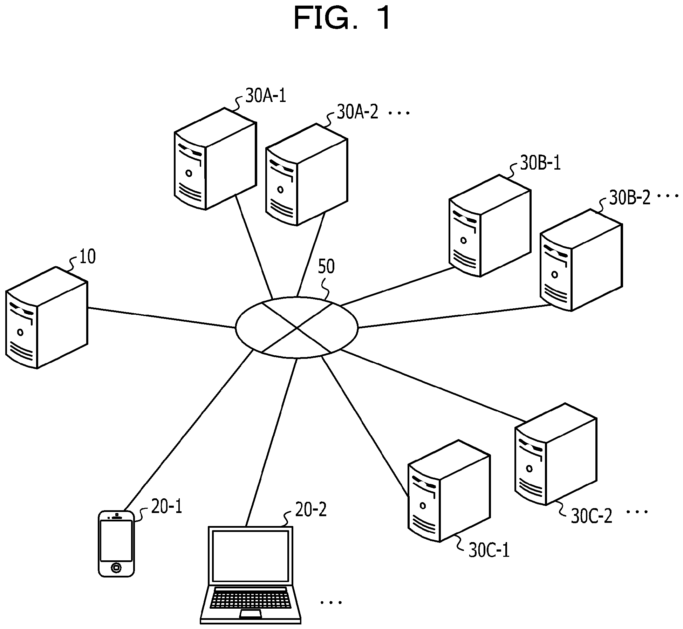

FIG. 1 is a diagram illustrating an example of a configuration of a communication system 1 according to an embodiment. In FIG. 1, the communication system 1 includes a server 10; terminals 20-1, 20-2, ... (hereinafter, simply referred to as "terminals 20" when distinction is not required); and nodes 30A-1, 30A-2, ..., nodes 30B-1, 30B-2, ..., and nodes 30C-1, 30C-2, ... (hereinafter, simply referred to as "nodes 30" when distinction is not required).

The server 10, the terminals 20, and the nodes 30 are coupled in a communicable state via a network 50 such as the Internet, a mobile phone network, a wireless local area network (LAN), or a LAN, for example.

The nodes 30A-1, 30A-2, ... are a group of computers that realizes a distributed ledger for a virtual currency A (an example of a "first virtual currency"). The nodes 30B-1, 30B-2, ... are a group of computers that realizes a distributed ledger for a virtual currency B (an example of a "second virtual currency"). The nodes 30C-1, 30C-2, ... are a group of computers for storing a distributed ledger for a virtual currency C (an example of a "third virtual currency").

The distributed ledger for each virtual currency includes blockchain information for each virtual currency. The blockchain refers to a list of linked blocks in which transaction data generated every predetermined time is collected, for example. The blockchain is stored in common in the plurality of nodes 30, and the legitimacy of the transactions is monitored by the plurality of nodes 30, whereby a distributed ledger that is disclosed to the outside is realized.

The server 10 is an information processing apparatus (computer) that calculates an exchange ratio (exchange rate) between the virtual currency A and the virtual currency B based on a history of transactions of commodities or the like (an example of a "transaction target") using the virtual currency A and a history of transactions of commodities or the like using the virtual currency B.

The server 10 may be a group of computers that realizes a distributed ledger composed of a plurality of nodes, and the distributed ledger composed of the group of computers may be the same apparatuses as the nodes 30. The server 10 may be a node for interworking a plurality of distributed ledgers as described in " Fujitsu Develops Security Technology to Safely Connect Blockchains" (URL: https://www.fujitsu.com/global/about/resources/news/press-releases/2017/1115-01.html) and for constructing a distributed ledger for interworking a plurality of blockchains (ConnectionChain).

The server 10 may have a function of performing payment for a commodity or the like using the virtual currency A or the like in response to a request from the terminal 20. In this case, for example, the server 10 records, by using a smart contract program that automates transactions using the virtual currency A or the like, the content of the transaction using the virtual currency A or the like in the distributed ledger for the virtual currency A, the server 10 on which a web application for exchanging virtual currencies or the like are running, another information processing apparatus, a distributed ledger such as ConnectionChain, or the like.

The server 10 may have a function of exchanging the virtual currency A and the virtual currency B in response to a request from the terminal 20. In this case, for example, the server 10 records, by using a smart contract for the virtual currency A and a smart contract for virtual currency B, information on the exchange between the virtual currency A and the virtual currency B in the server 10, another information processing apparatus, a distributed ledger such as ConnectionChain, or the like.

The terminal 20 is an information processing apparatus such as a desktop personal computer (PC), a notebook PC, a tablet PC, or a smartphone. For example, in response to a user operation, the terminal 20 acquires information on the exchange ratio between the virtual currency A and the virtual currency B from the server 10.

### <Hardware Configuration>

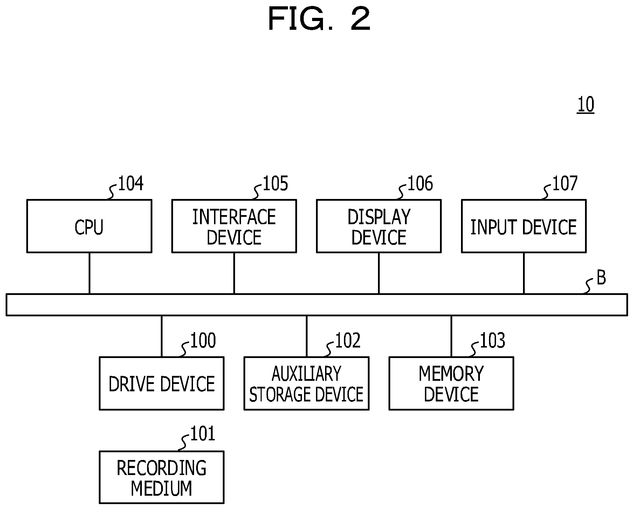

FIG. 2 is a diagram illustrating an example of a hardware configuration of the server 10 according to the embodiment. The server 10 in FIG. 2 includes a drive device 100, an auxiliary storage device 102, a memory device 103, a central processing unit (CPU) 104, an interface device 105, a display device 106, an input device 107, and the like that are mutually coupled by a bus B.

A program that realizes processing in the server 10 is provided by a recording medium 101. When the recording medium 101 on which the program is recorded is set in the drive device 100, the program is installed from the recording medium 101 to the auxiliary storage device 102 via the drive device 100. However, the program does not necessarily have to be installed from the recording medium 101 and may be downloaded from another computer via a network. The auxiliary storage device 102 stores the installed program, and stores required files, data, and the like.

The memory device 103 reads the program from the auxiliary storage device 102 and stores the read program, in response to an instruction to start the program. The CPU 104 realizes functions related to the server 10 in accordance with the program stored in the memory device 103. The interface device 105 is used as an interface for coupling the server 10 to a network. The display device 106 is a display that displays a graphical user interface (GUI) or the like in accordance with a program. The input device 107 receives input of various operation instructions.

An example of the recording medium 101 is a portable recording medium such as a compact disc read-only memory (CD-ROM), a digital versatile disc (DVD), or a Universal Serial Bus (USB) memory. An example of the auxiliary storage device 102 is a hard disk drive (HDD), a flash memory, or the like. Each of the recording medium 101 and the auxiliary storage device 102 corresponds to a computer-readable recording medium. The hardware configuration of the terminal 20 may be substantially the same as the example of the hardware configuration of the server 10 illustrated in FIG. 2.

<Functional Configuration>

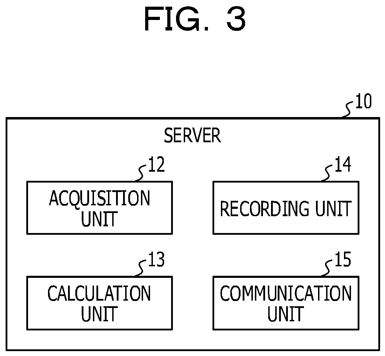

Next, a functional configuration of the communication system 1 according to the embodiment will be described with reference to FIG. 3. FIG. 3 is a diagram illustrating an example of a functional configuration of the server 10 according to the embodiment.

The server 10 includes an acquisition unit 12, a calculation unit 13, a recording unit 14, and a communication unit 15. The acquisition unit 12, the calculation unit 13, the recording unit 14, and the communication unit 15 are realized by processing that one or more programs installed in the server 10 cause the CPU 104 of the server 10 to execute.

The acquisition unit 12 acquires information of a history of transactions of commodities or the like using each virtual currency from the distributed ledger for each virtual currency stored in the plurality of nodes 30. For example, the acquisition unit 12 acquires a price of a commodity in a certain virtual currency when the commodity is purchased using the certain virtual currency, and a price of the commodity in another virtual currency when the commodity is purchased using the other virtual currency.

Based on the information acquired by the acquisition unit 12, the calculation unit 13 calculates an exchange ratio between the certain virtual currency and the other virtual currency.

When a transaction of a commodity or the like is performed using each virtual currency, the recording unit 14 stores information of a history of the transaction of the commodity or the like using each virtual currency in the distributed ledger for each virtual currency or a predetermined distributed ledger.

The communication unit 15 communicates with the terminals 20 and the nodes 30.

<Processing>

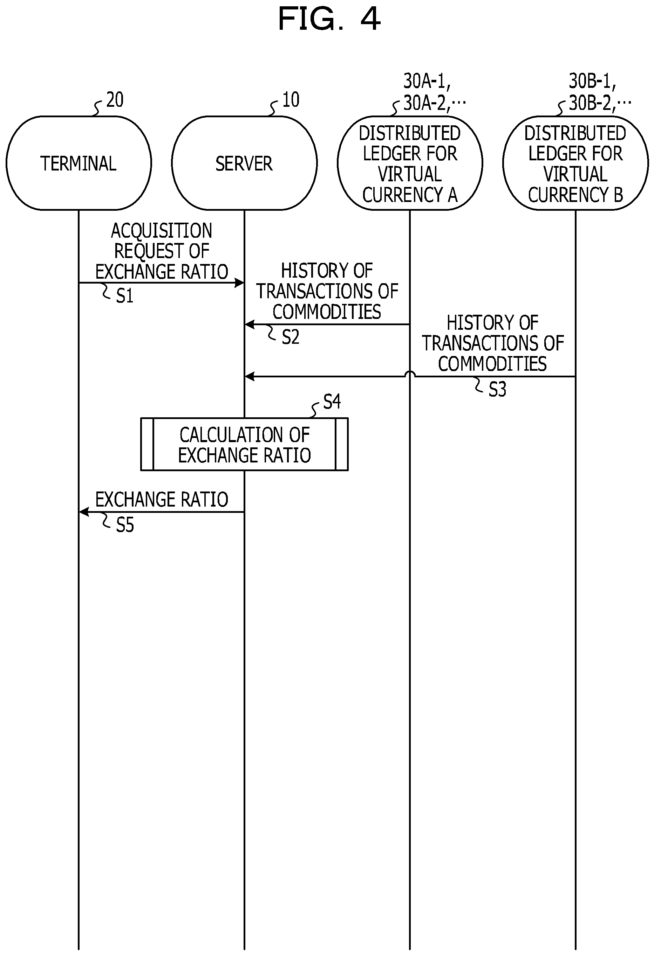

Next, an example of processing executed in the communication system 1 according to the embodiment will be described with reference to FIG. 4. FIG. 4 is a sequence diagram illustrating an example of processing executed in the communication system 1 according to the embodiment.

In step S1, the terminal 20 transmits an acquisition request for information on the exchange ratio between the virtual currency A and the virtual currency B to the server 10 in response to a user operation or the like.

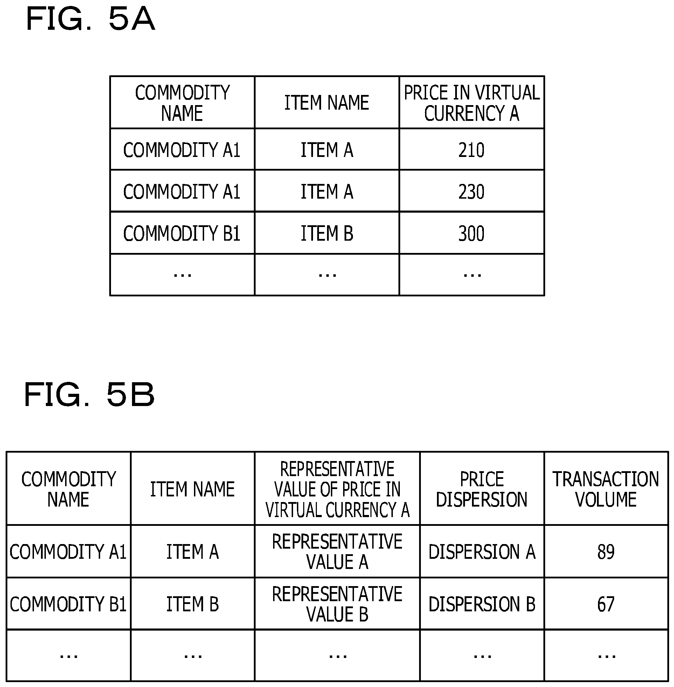

Subsequently, the acquisition unit 12 of the server 10 acquires a history of transactions of commodities using the virtual currency A from the distributed ledger for the virtual currency A stored in the nodes 30A-1, 30A-2, ... (step S2). Information indicating what commodity is the target of the transaction when the commodity is bought and sold between users is not generally recorded in the transaction history on the blockchain of the related art. Therefore, in the present embodiment, for example, the server 10 or the nodes 30A-1, 30A-2, ... automatically record, by using a smart contract program that runs on the server 10 or the nodes 30A-1, 30A-2, ... or the like, information related to commodities purchased using the virtual currency A in the distributed ledger for the virtual currency A or the like. Therefore, in this case, when a commodity is purchased using the virtual currency A (virtual currency A and commodity are exchanged), a history of transactions as illustrated in FIG. 5A or 5B is recorded by the recording unit 14 in the distributed ledger for the virtual currency A.

FIG. 5A is a diagram illustrating a first example of a history of transactions of commodities using a virtual currency according to the embodiment. In FIG. 5A, in the history of transactions of commodities using the virtual currency A, the commodity name of a commodity, the item name, and the price (purchased amount) in the virtual currency A are recorded in association with each other. The commodity name is the name of the commodity. The item name is information indicating the type (category) of the commodity. The price in the virtual currency A is an amount of the virtual currency A paid to purchase the commodity. Information on the date and time when the commodity is purchased using the virtual currency A may be recorded in the history of transactions. In this case, the server 10 may not use a history of transactions dated a predetermined number of days or more ago from now for calculating an exchange ratio. Consequently, the influence of the past transactions on the calculated exchange ratio may be made small.

For example, the history of transactions as illustrated in FIG. 5A is suitable when a virtual currency infrastructure is operated with an operational policy that disclosure of the transaction information indicating the price at which each commodity is purchased and the like is acceptable if the names or the like of a purchaser and a seller are hidden.

FIG. 5B is a diagram illustrating a second example of a history of transactions of commodities using a virtual currency according to the embodiment. In FIG. 5B, in the history of transactions of commodities using the virtual currency A, the item name, the representative value of the price, the price dispersion, and the transaction volume are recorded in association with the commodity name of a commodity. The representative value of the price is a value representing an amount of the virtual currency A paid in each transaction for purchasing the commodity (the price of the commodity in the virtual currency A). As the representative value of the price, for example, an average value, a median value, a mode value, a harmonic mean, or the like of the prices in respective transactions may be used.

The price dispersion is a value indicating variation in the distribution of the amount of the virtual currency A paid in each transaction for purchasing the commodity. As the price dispersion, for example, the coefficient of variation, variance, standard deviation, interquartile range (difference between the first and third quartiles), or the like of the prices in respective transactions may be used. The coefficient of variation is calculated by dividing the standard deviation by the average value. The coefficient of variation is, for example, a scale used when variations of distributions having different average values are relatively evaluated, takes a non-negative value, and indicates a smaller variation as the value is closer to 0. The transaction volume is the number of times a transaction of each commodity is performed.

For example, disclosure of individual transaction information is problematic from the viewpoint of privacy protection, but the history of transactions as illustrated in FIG. 5B is suitable when the virtual currency infrastructure is operated with an operational policy that permits disclosure of the abstract.

Subsequently, the acquisition unit 12 of the server 10 acquires a history of transactions of commodities using the virtual currency B from the distributed ledger for the virtual currency B stored in the nodes 30B-1, 30B-2, ... (step S3). The acquisition unit 12 of the server 10 acquires the history of transactions of commodities using the virtual currency B by substantially the same processing as in step S2.

Subsequently, the calculation unit 13 of the server 10 calculates an exchange ratio between the virtual currency A and the virtual currency B based on the history of transactions of commodities using the virtual currency A and the history of transactions of commodities using the virtual currency B (step S4). Subsequently, the communication unit 15 of the server 10 transmits information on the calculated exchange ratio to the terminal 20 (step S5).

<<Processing for Calculating Exchange Ratio>>

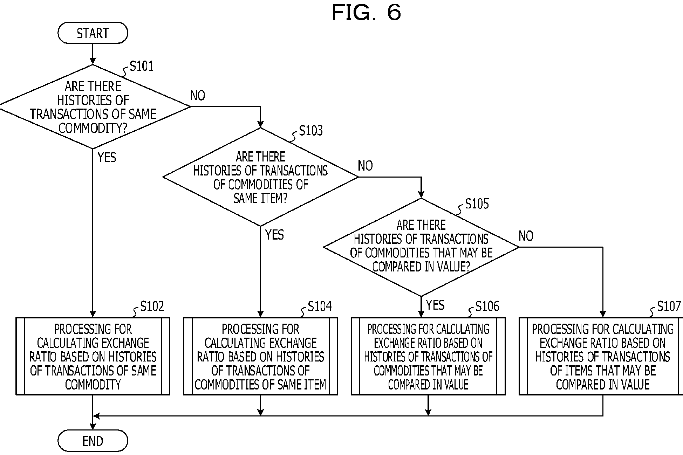

Next, an example of the processing for calculating the exchange ratio between the virtual currency A and the virtual currency B in step S4 of FIG. 4 will be described with reference to FIG. 6. FIG. 6 is a flowchart describing an example of the processing for calculating the exchange ratio between the virtual currency A and the virtual currency B according to the embodiment.

In step S101, the calculation unit 13 determines whether or not histories of transactions of the same commodity exist in the history of transactions of commodities using the virtual currency A and in the history of transactions of commodities using the virtual currency B. When the name of a commodity in the history of transactions using the virtual currency A matches the name of a commodity in the history of transactions using the virtual currency B, the calculation unit 13 determines that the commodities in these transaction histories are the same.

The calculation unit 13 may determine a plurality of commodities having substantially the same price to be the same in order to deal with variations in description of the name of the commodity in the histories of transactions or the like. In this case, the following processing may be performed. First, the calculation unit 13 calculates a price distribution of each commodity in the history of transactions using the virtual currency A or the virtual currency B and calculates the distance between the distributions. The calculation unit 13 may calculate the distance between the distributions using, for example, a test statistic of Welch's t test. When the distance between the price distribution of a commodity name A and the price distribution of a commodity name B is equal to or less than a predetermined threshold, the calculation unit 13 determines that the commodity with the commodity name A and the commodity with the commodity name B are the same.

If there are histories of transactions of the same commodity (YES in step S101), the calculation unit 13 performs processing for calculating the exchange ratio based on the histories of transactions of the same commodity (step S102). Details of this processing will be described later.

If there are no histories of transactions of the same commodity (NO in step S101), the calculation unit 13 determines whether or not there are histories of transactions of commodities of the same item in the history of transactions of commodities using the virtual currency A and the history of transactions of commodities using the virtual currency B (step S103). When an item name in the history of transactions using the virtual currency A matches an item name in the history transactions using the virtual currency B, the calculation unit 13 determines that the items in these histories of transactions are the same. Similarly to the processing described in the processing of step S101, the calculation unit 13 may determine a plurality of items having substantially the same price to be the same in order to deal with variations in description of the name of the item in the history of transactions using one virtual currency or the like.

When there are histories of transactions of commodities of the same item (YES in step S103), the calculation unit 13 performs processing for calculating the exchange ratio based on the histories of transactions of commodities of the same item (step S104). Consequently, even when a transaction of the same commodity is not performed using the virtual currency A and the virtual currency B, the exchange ratio serving as a reference may be determined based on histories of transactions of similar commodities. Details of this processing will be described later.

If there are no histories of transactions of commodities of the same item (NO in step S103), the calculation unit 13 determines whether or not there are histories of transactions of commodities that may be compared in value in the history of transactions of commodities using the virtual currency A and the history of transactions of commodities using the virtual currency B (step S105).

If there are histories of transactions of commodities that may be compared in value (YES in step S105), the calculation unit 13 performs processing for calculating the exchange ratio based on the histories of transactions of commodities that may be compared in value (step S106). Details of this processing will be described later.

If there are no histories of transactions of commodities that may be compared in value (NO in step S105), the calculation unit 13 performs processing for calculating the exchange ratio based on histories of transactions of items that may be compared in value (step S107). Details of this processing will be described later.

<<Processing for Calculating Exchange Ratio based on Histories of Transactions of Same Commodity>>

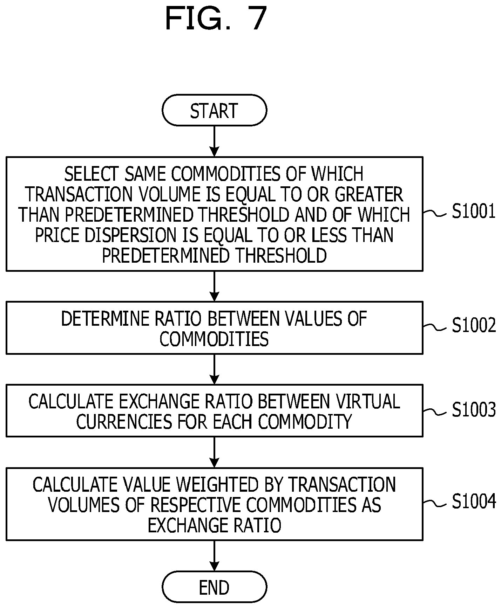

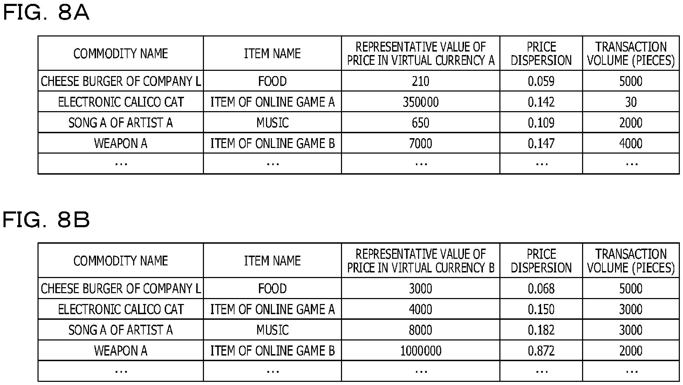

Next, an example of the processing for calculating the exchange ratio based on the histories of transactions of the same commodity in step S102 of FIG. 6 will be described with reference to FIGs. 7, 8A, and 8B. FIG. 7 is a flowchart describing an example of the processing for calculating the exchange ratio based on the histories of transactions of the same commodity according to the embodiment. FIG. 8A is a diagram illustrating an example of a history of transactions of commodities using the virtual currency A according to the embodiment. FIG. 8B is a diagram illustrating an example of a history of transactions of commodities using the virtual currency B according to the embodiment.

In step S1001, the calculation unit 13 selects, from among commodities (same commodities) that are included in common in the history of transactions of commodities using the virtual currency A and the history of transactions of commodities using the virtual currency B, commodities of which a transaction volume in each transaction history in a predetermined period (one month, for example) is equal to or greater than a predetermined threshold and of which a price dispersion in the predetermined period is equal to or less than a predetermined threshold.

It is assumed that the history of transactions of commodities using the virtual currency A in the predetermined period includes the information illustrated in FIG. 8A, and that the history of transactions of commodities using the virtual currency B in the predetermined period includes the information illustrated in FIG. 8B. FIGs. 8A and 8B have commodity names such as "CHEESE BURGER OF COMPANY L", "ELECTRONIC CALICO CAT", "SONG A OF ARTIST A", and "WEAPON A" in common. When the threshold of the transaction volume is set to 1000 and the threshold of the price dispersion is set to 0.2, the calculation unit 13 selects "CHEESE BURGER OF COMPANY L" and "SONG A OF ARTIST A" from among these commodities having the same commodity names. If there are no same commodities that meet the conditions of the transaction volume and the price dispersion, the processing may proceed to step S103 in FIG. 6.

Subsequently, for each of the selected commodities, the calculation unit 13 determines a ratio $u_i$ between the value of an i-th commodity i selected from the history of transactions using the virtual currency A and the value of the i-th commodity i selected from the history of transactions using the virtual currency B (step S1002). In the processing of FIG. 7, since the commodity i in the history of transactions using the virtual currency A and the commodity i in the history of transactions using the virtual currency B are the same, these values may be regarded to be equal (the same value). Therefore, the calculation unit 13 may determine each of $u_1$ to $u_N$ to be 1. N is the total number of commodities selected in step S1001.

Subsequently, the calculation unit 13 calculates an exchange ratio $R_i$ between the virtual currencies for each of the selected commodities (step S1003). The calculation unit 13 may calculate the ratio between the representative values for each commodity in the virtual currencies, for example, by using Equation (1) below. In Equation (1), $S_{Ai}$ is the representative value of the price of the i-th commodity i in the virtual currency A, $S_{Bi}$ is the representative value of the price of the i-th commodity i in the virtual currency B, and $R_i$ is the exchange ratio between the virtual currencies for the i-th commodity i.

$$R_i = \frac{S_{Ai}}{S_{Bi}} u_i \quad \cdots (1)$$

Subsequently, the calculation unit 13 calculates a value obtained by weighting the exchange ratio $R_i$ between the virtual currencies for each selected commodity with the transaction volumes of the commodity, as the exchange ratio R between the virtual currency A and the virtual currency B (step S1004). The calculation unit 13 may calculate, as the exchange ratio R, a weighted average of the exchange ratios $R_i$ for the individual commodities weighted by the corresponding transaction volumes of the commodities, for example. In this way, for example, even when the value of a certain commodity is not stable, a more appropriate exchange ratio may be calculated. In this case, the calculation unit 13 may calculate the exchange ratio R by using Equation (2) below, for example. In Equation (2), N is the total number of selected commodities, $t_{Ai}$ is the transaction volume of the i-th commodity in the virtual currency A, and $t_{Bi}$ is the transaction volume of the i-th commodity in the virtual currency B.

$$R = \frac{\sum_{i=1}^{N}(t_{Ai} + t_{Bi})\,R_i}{\sum_{i=1}^{N}(t_{Ai} + t_{Bi})} \quad \cdots (2)$$

In this case, in the examples of FIGs. 8A and 8B, the exchange ratio $R_1$ between the virtual currency A and the virtual currency B for "CHEESE BURGER OF COMPANY L" is 0.07 (= 210/3000). The exchange ratio $R_2$ between the virtual currency A and the virtual currency B for "SONG A OF ARTIST A" is calculated to be 0.08125 (= 650/8000).

The exchange ratio R weighted by the transaction volumes in the virtual currencies is calculated to be 0.07375 from {0.07 × (5000 + 5000) + 0.08125 × (2000 + 3000)}/{(5000 + 5000) + (2000 + 3000)}. This indicates that if the user of the terminal 20 wants to receive 1000 in the virtual currency B when exchanging the virtual currency A for the virtual currency B, the user gives 73.75 (= 0.07375 × 1000) in the virtual currency A.

<<Processing for Calculating Exchange Ratio based on Histories of Transactions of Commodities of Same Item>>

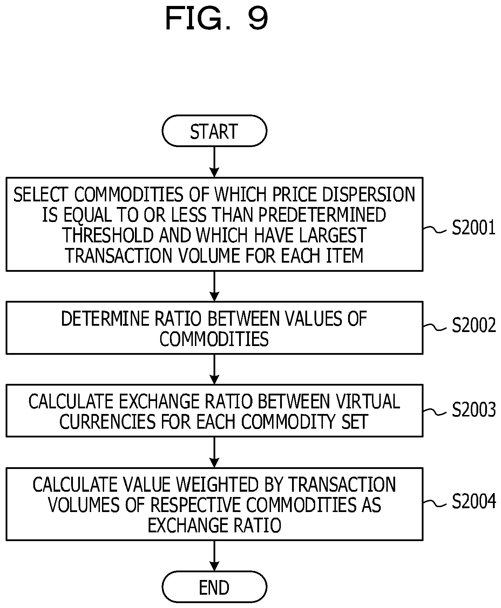

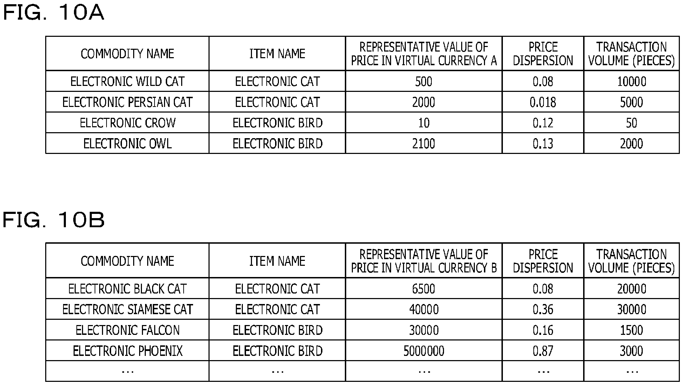

Next, an example of the processing for calculating the exchange ratio based on histories of transactions of commodities of the same item in step S104 in FIG. 6 will be described with reference to FIGs. 9, 10A, and 10B. FIG. 9 is a flowchart describing an example of the processing for calculating the exchange ratio based on histories of transactions of commodities of the same item according to the embodiment. FIG. 10A is a diagram illustrating an example of a history of transactions of commodities using the virtual currency A according to the embodiment. FIG. 10B is a diagram illustrating an example of a history of transactions of commodities using the virtual currency B according to the embodiment.

In step S2001, the calculation unit 13 selects, from among commodities having item names in common in the history of transactions of commodities using the virtual currency A and the history of transactions of commodities using the virtual currency B, commodities of which the price dispersion in a predetermined period is equal to or less than a predetermined threshold and which has the largest transaction volume in the predetermined period for each item.

It is assumed that the history of transactions of commodities using the virtual currency A in the predetermined period includes the information illustrated in FIG. 10A, and that the history of transactions of commodities using the virtual currency B in the predetermined period includes the information illustrated in FIG. 10B. FIGs. 10A and 10B include the item names "ELECTRONIC CAT" and "ELECTRONIC BIRD" in common. When the threshold of the price dispersion is set to 0.2, the calculation unit 13 selects "ELECTRONIC WILDCAT" for the item "ELECTRONIC CAT" in FIG. 10A. The calculation unit 13 selects "ELECTRONIC OWL" for the item "ELECTRONIC BIRD" in FIG. 10A. The calculation unit 13 selects "ELECTRONIC BLACK CAT" for the item "ELECTRONIC CAT" in FIG. 10B. The calculation unit 13 selects "ELECTRONIC FALCON" for the item "ELECTRONIC BIRD" in FIG. 10B. For example, for "ELECTRONIC CAT", a set of "ELECTRONIC WILDCAT" and "ELECTRONIC BLACK CAT" is selected. For "ELECTRONIC BIRD", a set of "ELECTRONIC OWL" and "ELECTRONIC FALCON" is selected. If there are no commodities of the same item that meet the condition of the price dispersion, the processing may proceed to step S105 in FIG. 6.

Subsequently, the calculation unit 13 determines the ratio $u_i$ between the value of a first commodity (commodity related to the history of transactions using the virtual currency A) and a second commodity (commodity related to the history of transactions using the virtual currency B) included in a set of commodities of an i-th item among the selected same items (step S2002). The calculation unit 13 may use a preset value as the ratio $u_i$ between the value of the first commodity and the value of the second commodity. Alternatively, the calculation unit 13 may calculate the ratio $u_i$ between the value of the first commodity and the value of the second commodity based on a history of transactions of commodities using the virtual currency C as in an example of processing in step S3002 described later.

Subsequently, the calculation unit 13 calculates the exchange ratio $R_i$ between the virtual currencies for the set of commodities of the i-th item among the selected same items (step S2003). The calculation unit 13 may calculate the exchange ratio between the virtual currencies for each of the commodities of the same item by using, for example, Equation (1) above.

Subsequently, the calculation unit 13 calculates a value obtained by weighting the exchange ratio $R_i$ between the virtual currencies for the set of commodities of the same item with the transaction volumes of the respective commodities, as the exchange ratio R between the virtual currency A and the virtual currency B (step S2004). This processing is substantially the same as the processing in step S1004 described above.

When each of the ratios $u_1$ and $u_2$ determined by the processing of step S2002 is 1, the exchange ratio $R_1$ between the virtual currency A and the virtual currency B based on the representative values of the prices of "ELECTRONIC WILDCAT" and "ELECTRONIC BLACK CAT" is calculated to be 0.0769 (= 500/6500) in the examples of FIGs. 10A and 10B. The exchange ratio $R_2$ between the virtual currency A and the virtual currency B based on the representative values of the prices of "ELECTRONIC OWL" and "ELECTRONIC FALCON" is calculated to be 0.07 (= 2100/30000).

The exchange ratio R weighted by the transaction volumes of the commodities of the same item in the respective virtual currencies is calculated to be 0.076 from {0.0769 × (10000 + 20000) + 0.07 × (2000 + 1500)}/(10000 + 20000 + 2000 + 1500). This indicates that when the user of the terminal 20 wants to receive 1000 in the virtual currency B when exchanging the virtual currency A for the virtual currency B, the user gives 76 (= 0.076 × 1000) in the virtual currency A.

<<Processing for Calculating Exchange Ratio based on Histories of Transactions of Commodities that may be Compared in Value>>

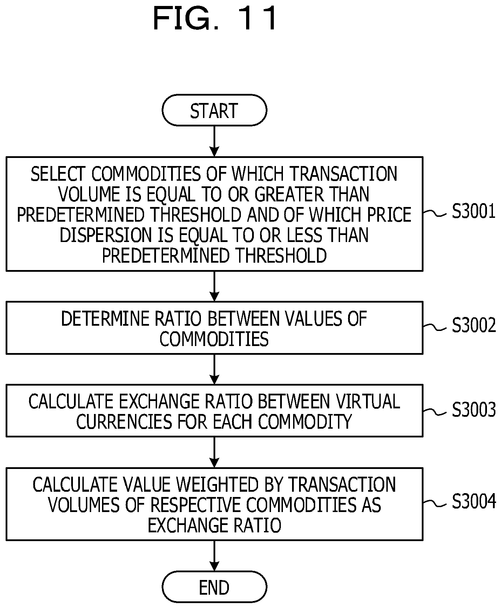

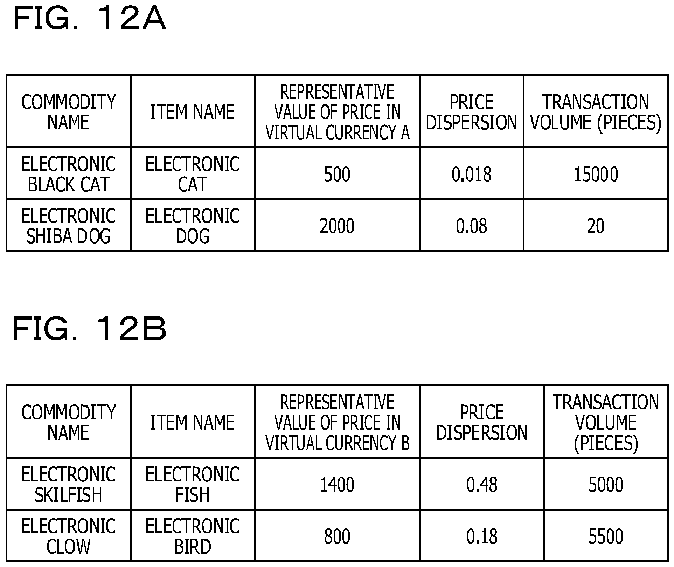

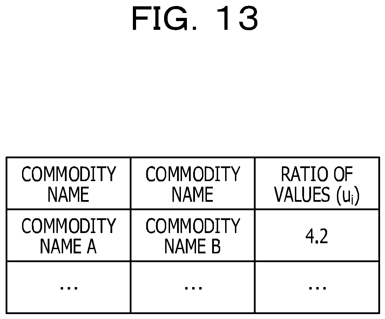

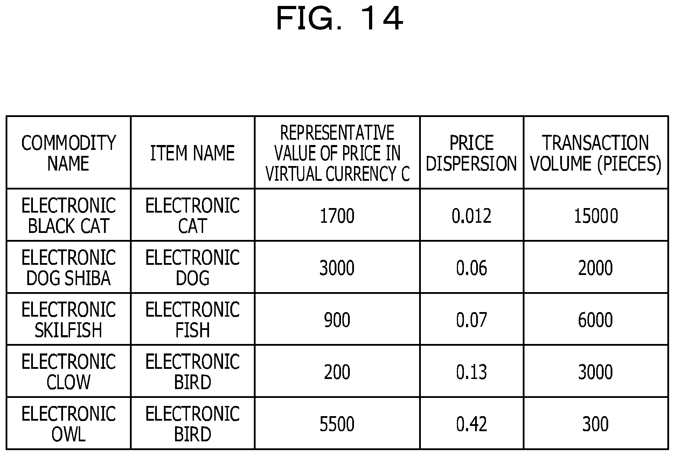

Next, an example of the processing for calculating the exchange ratio based on histories of transactions of commodities that may be compared in value in step S106 in FIG. 6 will be described with reference to FIGs. 11, 12A, and 12B. FIG. 11 is a flowchart describing an example of the processing for calculating the exchange ratio based on histories of transactions of commodities that may be compared in value according to the embodiment. FIG. 12A is a diagram illustrating an example of a history of transactions of commodities using the virtual currency A according to the embodiment. FIG. 12B is a diagram illustrating an example of a history of transactions of commodities using the virtual currency B according to the embodiment. FIG. 13 is a diagram illustrating an example of setting information of a ratio between values of commodities according to the embodiment. FIG. 14 is a diagram illustrating an example of a history of transactions using the virtual currency C according to the embodiment.

In step S3001, from the history of transactions of commodities using the virtual currency A and the history of transactions of commodities using the virtual currency B, the calculation unit 13 selects commodities of which the transaction volume in a predetermined period is equal to or greater than a predetermined threshold and the price dispersion in the predetermined period is equal to or less than a predetermined threshold.

It is assumed that the history of transactions of commodities using the virtual currency A in the predetermined period includes the information illustrated in FIG. 12A, and that the history of transactions of commodities using the virtual currency B in the predetermined period includes the information illustrated in FIG. 12B. When the threshold of the transaction volume is set to 1000 and the threshold of the price dispersion is set to 0.2, the calculation unit 13 selects "ELECTRONIC BLACK CAT" in FIG. 12A and "ELECTRONIC CROW" in FIG. 12B. For example, a set of "ELECTRONIC BLACK CAT" and "ELECTRONIC CROW" is selected.

Subsequently, the calculation unit 13 determines the ratio $u_i$ between the value of the first commodity and the value of the second commodity included in each selected set i of commodities (step S3002). The calculation unit 13 may use a preset value as illustrated in FIG.

13 as $u_i$ in Equation (1) above. The example of FIG. 13 indicates that the ratio between the value of a commodity with the commodity name A and the value of a commodity with the commodity name B is "4.2". For example, it is indicated that if the price of the commodity with the commodity name A is 100, the price of the commodity with the commodity name B is 420.

The calculation unit 13 may calculate the ratio $u_i$ based on the history of transactions using the virtual currency C illustrated in FIG. 14. In this case, the calculation unit 13 acquires information of the history of transactions of commodities using the virtual currency C from the distributed ledger for the virtual currency C stored in the nodes 30C-1, 30C-2, .... From the history of transactions of commodities using the virtual currency C, the calculation unit 13 selects commodities of which the transaction volume is equal to or greater than a predetermined threshold and the price dispersion is equal to or less than a predetermined threshold. When the threshold of the transaction volume is set to 1000 and the threshold of the price dispersion is set to 0.2, the calculation unit 13 selects "ELECTRONIC BLACK CAT", "ELECTRONIC DOG SHIBA", "ELECTRONIC SKILFISH", and "ELECTRONIC CROW" in FIG. 14. The calculation unit 13 calculates the ratio $u_1$ between the value of "ELECTRONIC BLACK CAT" and the value of "ELECTRONIC CROW" selected in the processing of step S3001. In the example of FIG. 14, the ratio $u_1$ between the value of "ELECTRONIC BLACK CAT" and the value of "ELECTRONIC CROW" is calculated to be 8.5 (= 1700/200). For example, the ratio between the prices of the commodities in another virtual currency is calculated as the ratio $u_1$ between the values.

Subsequently, the calculation unit 13 calculates the exchange ratio $R_i$ between the virtual currencies for each set i of commodities (step S3003). For example, the calculation unit 13 may calculate the exchange ratio between the virtual currencies for each set of commodities by using Equation (1) above. In this case, the calculation unit 13 obtains, by calculation, 0.625 (= 500/800), which is a value of the ratio between "500", which is the representative value in the virtual currency A for "ELECTRONIC BLACK CAT" in FIG. 12A, and "800", which is the representative value in the virtual currency B for "ELECTRONIC CROW" in FIG. 12B. The calculation unit 13 sets a value (0.0735) obtained by dividing the value of the ratio (0.625) by the value of $u_1$ (8.5) as the exchange ratio $R_1$.

Subsequently, the calculation unit 13 calculates a value obtained by weighting the exchange ratio between the virtual currencies for each set of commodities with the transaction volumes of the respective commodities, as the exchange ratio R between the virtual currency A and the virtual currency B (step S3004). This processing is substantially the same as the processing in step S1004 described above.

<<Processing for Calculating Exchange Ratio based on Histories of Transactions of Items that may be Compared in Value>>

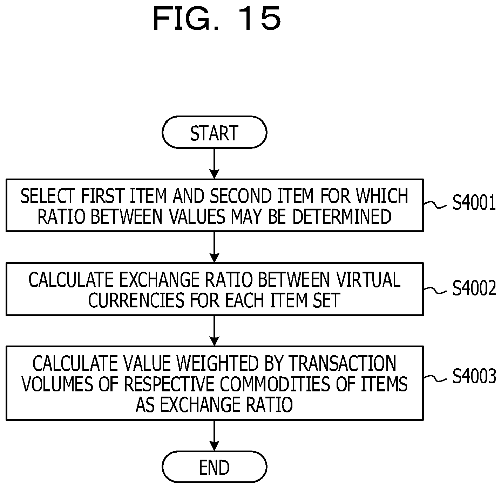

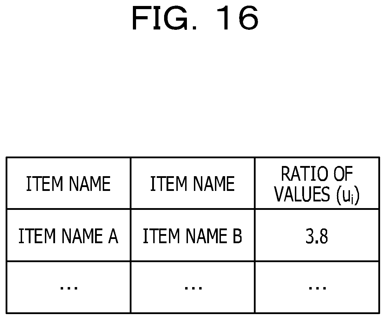

Next, an example of the processing for calculating the exchange ratio based on histories of transactions of items that may be compared in value in step S107 in FIG. 6 will be described with reference to FIGs. 15 and 16. FIG. 15 is a flowchart describing an example of the processing for calculating the exchange ratio based on histories of transactions of items that may be compared in value according to the embodiment. FIG. 16 is a diagram illustrating an example of setting information of a ratio between values of items according to the embodiment.

In step S4001, the calculation unit 13 selects a first item and a second item for which the ratio between the value of the first item and the value of the second item may be determined, from the history of transactions of commodities using the virtual currency A and the history of transactions of commodities using the virtual currency B. For example, the calculation unit 13 determines that the ratio between the value of the first item and the value of the second item may be determined when the ratio between the value of the first item and the value of the second item is preset.

Subsequently, the calculation unit 13 calculates the exchange ratio $R_i$ between the virtual currencies for each set i of items (step S4002). The calculation unit 13 may first use the ratio, which is preset as illustrated in FIG. 16, between the value of the first item and the value of the second item as the ratio $u_i$ in Equation (1) above. The example of FIG. 16 indicates that the ratio between the value of each commodity included in an item with an item name A and the value of each commodity included in an item with an item name B is "3.8". For example, if the price of each commodity included in the item with the item name A is 100, the price of each commodity included in the item with the item name B is 380. Alternatively, the calculation unit 13 may calculate the ratio between the value of the first item and the value of the second item based on the history of transactions using the virtual currency C. For example, the calculation unit 13 may calculate the exchange ratio between the virtual currencies for each set of items by using Equation (1) above.

Subsequently, the calculation unit 13 calculates a value obtained by weighting the exchange ratio between the virtual currencies for each set of items with the transaction volumes of the respective commodities included in the items, as the exchange ratio R (step S4003). This processing is substantially the same as the processing in step S1004 described above.

<Modification>

Each functional unit of the server 10 may be realized by cloud computing constituted by one or more computers, for example. The server 10 may include at least some of the functions of the node 30. The history of transactions using each currency may take a form of being collectively managed in the server, rather than being distributed and held on the blockchain.

<Effects of Embodiment

In the related art, the exchange rate between major virtual currencies may be appropriately determined from the supply and demand balance of currency exchange transactions. However, for example, in the case of currency exchange between a major virtual currency and a new virtual currency or the like, since there is not a sufficient volume of currency exchange transactions, it may be difficult to determine the exchange rate in some cases.

According to the embodiment described above, the exchange ratio between the virtual currency A and the virtual currency B is calculated based on the price of a transaction target x in the history of transactions using the virtual currency A, the price of a transaction target y in the history of transactions using the virtual currency B, and the ratio between the value of the transaction target x and the value of the transaction target y. In this way, an objective value may be given to the virtual currency.

Although the embodiment of the present disclosure has been described in detail above, the present disclosure is not limited to such a specific embodiment, and various modifications and changes may be made within the scope of the gist of the disclosure described in the claims. The server 10 is an example of an "information processing apparatus".

**Claims**

1. An information processing apparatus comprising:

   an acquisition unit that acquires a price of a first transaction target in a history of transactions using a first virtual currency and a price of a second transaction target in a history of transactions using a second virtual currency; and
   a calculation unit that calculates an exchange ratio between the first virtual currency and the second virtual currency based on the price of the first transaction target and the price of the second transaction target.

2. The information processing apparatus according to claim 1, wherein
   the first transaction target is a transaction target equivalent to the second transaction target, and
   the calculation unit calculates the exchange ratio between the first virtual currency and the second virtual currency based on a ratio between the price of the first transaction target in the first virtual currency and the price of the second transaction target in the second virtual currency.

3. The information processing apparatus according to claim 1 or 2, wherein
the first transaction target and the second transaction target are transaction targets having different values,
the acquisition unit acquires a price of the first transaction target and a price of the second transaction target in a history of transactions using a third virtual currency, and
the calculation unit calculates the exchange ratio between the first virtual currency and the second virtual currency based on the price of the first transaction target in the third virtual currency and the price of the second transaction target in the third virtual currency.

4. The information processing apparatus according to any one of claims 1 to 3, wherein
the acquisition unit further acquires a price of a third transaction target in the history of transactions using the first virtual currency, and a price of a fourth transaction target in the history of transactions using the second virtual currency, and
the calculation unit
calculates a first exchange ratio related to the first virtual currency and the second virtual currency based on the price of the first transaction target and the price of the second transaction target,
calculates a second exchange ratio related to the first virtual currency and the second virtual currency based on the price of the third transaction target and the price of the fourth transaction target, and
calculates the exchange ratio between the first virtual currency and the second virtual currency by using a transaction volume of the first transaction target and a transaction volume of the second transaction target as weights for the first exchange ratio and by using a transaction volume of the third transaction target and a transaction volume of the fourth transaction target as weights for the second exchange ratio.

5. The information processing apparatus according to any one of claims 1 to 4, wherein
the calculation unit
calculates the exchange ratio between the first virtual currency and the second virtual currency by using a transaction target of which a price dispersion in a predetermined period is equal to or less than a threshold among transaction targets included in the first transaction target.

6. The information processing apparatus according to any one of claims 1 to 5, wherein
the calculation unit calculates the exchange ratio between the first virtual currency and the second virtual currency by using a transaction target of which a transaction volume in a predetermined period is equal to or greater than a threshold among transaction targets included in the first transaction target.

7. A program for causing a computer to execute a process, the process comprising:

acquiring a price of a first transaction target in a history of transactions using a first virtual currency;
acquiring a price of a second transaction target in a history of transactions using a second virtual currency; and
calculating an exchange ratio between the first virtual currency and the second virtual currency based on the price of the first transaction target and the price of the second transaction target.

8. An information processing method executed by an information processing apparatus, the information processing method comprising:

acquiring a price of a first transaction target in a history of transactions using a first virtual currency;
acquiring a price of a second transaction target in a history of transactions using a second virtual currency; and
calculating an exchange ratio between the first virtual currency and the second virtual currency based on the price of the first transaction target and the price of the second transaction target.

# FIG. 1

# FIG. 2

10

| | | | |
|---|---|---|---|
| 104 | 105 | 106 | 107 |
| CPU | INTERFACE DEVICE | DISPLAY DEVICE | INPUT DEVICE |

B

| | | |
|---|---|---|
| 100 | 102 | 103 |
| DRIVE DEVICE | AUXILIARY STORAGE DEVICE | MEMORY DEVICE |

101

RECORDING MEDIUM

# FIG. 3

SERVER 10

ACQUISITION UNIT 12

RECORDING UNIT 14

CALCULATION UNIT 13

COMMUNICATION UNIT 15

# FIG. 4

FIG. 5A

| COMMODITY NAME | ITEM NAME | PRICE IN VIRTUAL CURRENCY A |
|---|---|---|
| COMMODITY A1 | ITEM A | 210 |
| COMMODITY A1 | ITEM A | 230 |
| COMMODITY B1 | ITEM B | 300 |
| ... | ... | ... |

FIG. 5B

| COMMODITY NAME | ITEM NAME | REPRESENTATIVE VALUE OF PRICE IN VIRTUAL CURRENCY A | PRICE DISPERSION | TRANSACTION VOLUME |
|---|---|---|---|---|
| COMMODITY A1 | ITEM A | REPRESENTATIVE VALUE A | DISPERSION A | 89 |
| COMMODITY B1 | ITEM B | REPRESENTATIVE VALUE B | DISPERSION B | 67 |
| ... | ... | ... | ... | ... |

FIG. 6

```
                          ┌─────────┐
                          │  START  │
                          └────┬────┘
                               │        ╭S101
                          ╱────┴────╲
                        ╱  ARE THERE  ╲
                      ╱   HISTORIES OF   ╲    NO
                     ╱ TRANSACTIONS OF SAME ╲────────────┐
                      ╲    COMMODITY?     ╱               │
                        ╲              ╱                  │        ╭S103
                          ╲────┬────╱                ╱───┴────╲
                               │                   ╱  ARE THERE  ╲
                              YES                ╱ HISTORIES OF TRANSACTIONS ╲   NO
                               │                ╱  OF COMMODITIES OF  ╲────────────┐
                               │                 ╲   SAME ITEM?    ╱               │
                               │                   ╲            ╱                  │      ╭S105
                               │                     ╲──┬──╱                 ╱────┴────╲
                               │                       YES                 ╱  ARE THERE  ╲
                               │                        │                ╱ HISTORIES OF TRANSACTIONS ╲  NO
                               │                        │               ╱ OF COMMODITIES THAT MAY BE ╲──────┐
                               │                        │                ╲  COMPARED IN VALUE?  ╱          │
                               │                        │                  ╲            ╱                  │
                               │                        │                    ╲──┬──╱                       │
                               │                        │                     YES  ╭S106                   │
```

| PROCESSING FOR CALCULATING EXCHANGE RATIO BASED ON HISTORIES OF TRANSACTIONS OF SAME COMMODITY | PROCESSING FOR CALCULATING EXCHANGE RATIO BASED ON HISTORIES OF TRANSACTIONS OF COMMODITIES OF SAME ITEM | PROCESSING FOR CALCULATING EXCHANGE RATIO BASED ON HISTORIES OF TRANSACTIONS OF COMMODITIES THAT MAY BE COMPARED IN VALUE | PROCESSING FOR CALCULATING EXCHANGE RATIO BASED ON HISTORIES OF TRANSACTIONS OF ITEMS THAT MAY BE COMPARED IN VALUE |
|---|---|---|---|
| S102 | S104 | S106 | S107 |

```
                          ┌─────────┐
                          │   END   │
                          └─────────┘
```

# FIG. 7

```
         ┌─────────┐
         │  START  │
         └─────────┘
              │
              ▼
┌─────────────────────────────────────┐
│   SELECT SAME COMMODITIES OF WHICH   │
│  TRANSACTION VOLUME IS EQUAL TO OR   │
│  GREATER THAN PREDETERMINED          │       S1001
│  THRESHOLD AND OF WHICH              │
│  PRICE DISPERSION IS EQUAL TO OR     │
│  LESS THAN PREDETERMINED THRESHOLD   │
└─────────────────────────────────────┘
              │
              ▼
┌─────────────────────────────────────┐
│    DETERMINE RATIO BETWEEN VALUES    │       S1002
│           OF COMMODITIES             │
└─────────────────────────────────────┘
              │
              ▼
┌─────────────────────────────────────┐
│  CALCULATE EXCHANGE RATIO BETWEEN    │       S1003
│  VIRTUAL CURRENCIES FOR EACH         │
│  COMMODITY                           │
└─────────────────────────────────────┘
              │
              ▼
┌─────────────────────────────────────┐
│  CALCULATE VALUE WEIGHTED BY         │       S1004
│  TRANSACTION VOLUMES OF RESPECTIVE   │
│  COMMODITIES AS EXCHANGE RATIO       │
└─────────────────────────────────────┘
              │
              ▼
         ┌─────────┐
         │   END   │
         └─────────┘
```

FIG. 8A

| COMMODITY NAME | ITEM NAME | REPRESENTATIVE VALUE OF PRICE IN VIRTUAL CURRENCY A | PRICE DISPERSION | TRANSACTION VOLUME (PIECES) |
|---|---|---|---|---|
| CHEESE BURGER OF COMPANY L | FOOD | 210 | 0.059 | 5000 |
| ELECTRONIC CALICO CAT | ITEM OF ONLINE GAME A | 350000 | 0.142 | 30 |
| SONG A OF ARTIST A | MUSIC | 650 | 0.109 | 2000 |
| WEAPON A | ITEM OF ONLINE GAME B | 7000 | 0.147 | 4000 |
| … | … | … | … | … |

FIG. 8B

| COMMODITY NAME | ITEM NAME | REPRESENTATIVE VALUE OF PRICE IN VIRTUAL CURRENCY B | PRICE DISPERSION | TRANSACTION VOLUME (PIECES) |
|---|---|---|---|---|
| CHEESE BURGER OF COMPANY L | FOOD | 3000 | 0.068 | 5000 |
| ELECTRONIC CALICO CAT | ITEM OF ONLINE GAME A | 4000 | 0.150 | 3000 |
| SONG A OF ARTIST A | MUSIC | 8000 | 0.182 | 3000 |
| WEAPON A | ITEM OF ONLINE GAME B | 1000000 | 0.872 | 2000 |
| … | … | … | … | … |

# FIG. 9

START

SELECT COMMODITIES OF WHICH PRICE DISPERSION IS EQUAL TO OR LESS THAN PREDETERMINED THRESHOLD AND WHICH HAVE LARGEST TRANSACTION VOLUME FOR EACH ITEM ～ S2001

DETERMINE RATIO BETWEEN VALUES OF COMMODITIES ～ S2002

CALCULATE EXCHANGE RATIO BETWEEN VIRTUAL CURRENCIES FOR EACH COMMODITY SET ～ S2003

CALCULATE VALUE WEIGHTED BY TRANSACTION VOLUMES OF RESPECTIVE COMMODITIES AS EXCHANGE RATIO ～ S2004

END

## FIG. 10A

| COMMODITY NAME | ITEM NAME | REPRESENTATIVE VALUE OF PRICE IN VIRTUAL CURRENCY A | PRICE DISPERSION | TRANSACTION VOLUME (PIECES) |
|---|---|---|---|---|
| ELECTRONIC WILD CAT | ELECTRONIC CAT | 500 | 0.08 | 10000 |
| ELECTRONIC PERSIAN CAT | ELECTRONIC CAT | 2000 | 0.018 | 5000 |
| ELECTRONIC CROW | ELECTRONIC BIRD | 10 | 0.12 | 50 |
| ELECTRONIC OWL | ELECTRONIC BIRD | 2100 | 0.13 | 2000 |

## FIG. 10B

| COMMODITY NAME | ITEM NAME | REPRESENTATIVE VALUE OF PRICE IN VIRTUAL CURRENCY B | PRICE DISPERSION | TRANSACTION VOLUME (PIECES) |
|---|---|---|---|---|
| ELECTRONIC BLACK CAT | ELECTRONIC CAT | 6500 | 0.08 | 20000 |
| ELECTRONIC SIAMESE CAT | ELECTRONIC CAT | 40000 | 0.36 | 30000 |
| ELECTRONIC FALCON | ELECTRONIC BIRD | 30000 | 0.16 | 1500 |
| ELECTRONIC PHOENIX | ELECTRONIC BIRD | 5000000 | 0.87 | 3000 |
| ... | ... | ... | ... | ... |

# FIG. 11

```
              ┌─────────┐
              │  START  │
              └────┬────┘
                   │
                   ▼
┌──────────────────────────────────────────┐
│   SELECT COMMODITIES OF WHICH TRANSACTION │
│   VOLUME IS EQUAL TO OR GREATER THAN      │──── S3001
│ PREDETERMINED THRESHOLD AND OF WHICH PRICE│
│   DISPERSION IS EQUAL TO OR LESS THAN     │
│        PREDETERMINED THRESHOLD            │
└──────────────────┬───────────────────────┘
                   │
                   ▼
┌──────────────────────────────────────────┐
│     DETERMINE RATIO BETWEEN VALUES OF     │──── S3002
│               COMMODITIES                 │
└──────────────────┬───────────────────────┘
                   │
                   ▼
┌──────────────────────────────────────────┐
│  CALCULATE EXCHANGE RATIO BETWEEN VIRTUAL │──── S3003
│      CURRENCIES FOR EACH COMMODITY        │
└──────────────────┬───────────────────────┘
                   │
                   ▼
┌──────────────────────────────────────────┐
│  CALCULATE VALUE WEIGHTED BY TRANSACTION  │
│  VOLUMES OF RESPECTIVE COMMODITIES AS     │──── S3004
│             EXCHANGE RATIO                │
└──────────────────┬───────────────────────┘
                   │
                   ▼
              ┌─────────┐
              │   END   │
              └─────────┘
```

## FIG. 12A

| COMMODITY NAME | ITEM NAME | REPRESENTATIVE VALUE OF PRICE IN VIRTUAL CURRENCY A | PRICE DISPERSION | TRANSACTION VOLUME (PIECES) |
|---|---|---|---|---|
| ELECTRONIC BLACK CAT | ELECTRONIC CAT | 500 | 0.018 | 15000 |
| ELECTRONIC SHIBA DOG | ELECTRONIC DOG | 2000 | 0.08 | 20 |

## FIG. 12B

| COMMODITY NAME | ITEM NAME | REPRESENTATIVE VALUE OF PRICE IN VIRTUAL CURRENCY B | PRICE DISPERSION | TRANSACTION VOLUME (PIECES) |
|---|---|---|---|---|
| ELECTRONIC SKILFISH | ELECTRONIC FISH | 1400 | 0.48 | 5000 |
| ELECTRONIC CLOW | ELECTRONIC BIRD | 800 | 0.18 | 5500 |

# FIG. 13

| COMMODITY NAME | COMMODITY NAME | RATIO OF VALUES ($u_i$) |
|---|---|---|
| COMMODITY NAME A | COMMODITY NAME B | 4.2 |
| … | … | … |

# FIG. 14

| COMMODITY NAME | ITEM NAME | REPRESENTATIVE VALUE OF PRICE IN VIRTUAL CURRENCY C | PRICE DISPERSION | TRANSACTION VOLUME (PIECES) |
|---|---|---|---|---|
| ELECTRONIC BLACK CAT | ELECTRONIC CAT | 1700 | 0.012 | 15000 |
| ELECTRONIC DOG SHIBA | ELECTRONIC DOG | 3000 | 0.06 | 2000 |
| ELECTRONIC SKILFISH | ELECTRONIC FISH | 900 | 0.07 | 6000 |
| ELECTRONIC CLOW | ELECTRONIC BIRD | 200 | 0.13 | 3000 |
| ELECTRONIC OWL | ELECTRONIC BIRD | 5500 | 0.42 | 300 |

# FIG. 15

```
        ┌─────────────┐
        │    START    │
        └─────────────┘
               │
               ▼
┌───────────────────────────────────────┐
│ SELECT FIRST ITEM AND SECOND ITEM FOR WHICH │ ～ S4001
│  RATIO BETWEEN VALUES MAY BE DETERMINED │
└───────────────────────────────────────┘
               │
               ▼
┌───────────────────────────────────────┐
│ CALCULATE EXCHANGE RATIO BETWEEN VIRTUAL │ ～ S4002
│     CURRENCIES FOR EACH ITEM SET        │
└───────────────────────────────────────┘
               │
               ▼
┌───────────────────────────────────────┐
│ CALCULATE VALUE WEIGHTED BY TRANSACTION │ ～ S4003
│ VOLUMES OF RESPECTIVE COMMODITIES OF ITEMS │
│          AS EXCHANGE RATIO              │
└───────────────────────────────────────┘
               │
               ▼
        ┌─────────────┐
        │     END     │
        └─────────────┘
```

# FIG. 16

| ITEM NAME | ITEM NAME | RATIO OF VALUES ($u_i$) |
|---|---|---|
| ITEM NAME A | ITEM NAME B | 3.8 |
| … | … | … |

Europäisches
Patentamt

European
Patent Office

Office européen
des brevets

# EUROPEAN SEARCH REPORT

Application Number

EP 20 15 0474

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Article 92 EPC, relates to processes comprised in the list of subject-matter and activities excluded from patentability under Article 52(2) and (3) EPC. The information technology employed as an enabler for carrying out said processes is so well-known that its existence at the relevant date cannot reasonably be disputed. The claimed technical feature, namely an information processing apparatus, is therefore considered to be part of the notorious knowledge, for which no documentary evidence is deemed necessary (see Guidelines for Examination in the European Patent Office, B-VIII, 2.2.1).<br>----- | | INV.<br>G06Q40/04 |

TECHNICAL FIELDS
SEARCHED    (IPC)

G06Q

The present search report has been drawn up for all claims

| Place of search | Date of completion of the search | Examiner |
|---|---|---|
| The Hague | 20 February 2020 | Cîrstet, Andrei |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 .........................................................................................

& : member of the same patent family, corresponding
document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **EYAL HERTZOG ; GUY BENARTZI & GALIA BE-NARTZI.** Bancor Protocol - Continuous Liquidity and Asynchronous Price Discovery for Tokens through their Smart Contracts. *Smart Tokens,* 30 May 2017, https://bravenewcoin.com/assets/Whitepapers/Bancor-Protocol-Whitepaper-en.pdf.